# EUROPEAN PATENT APPLICATION

(11) **EP 2 110 975 A1**
(43) Date of publication of application: **21.10.2009**
(21) Application number: 09164891.5
(22) Date of filing: 06.05.2003
(51) Int. Cl.: H04K 1/00

(54) **Method and system for digital signatures**

(30) Priority: 06.05.2002 US 377652 P; 06.05.2002 US 377648 P; 10.07.2002 US 394652 P
(62) Divisional of application: 03724455.5
(71) Applicant: Bentley Systems, Incorporated, Exton, PA 19341-0678 (US)
(72) Inventor: Bentley, Keith, Elverson, PA 19520 (US); Wilson, Samuel, Downingtown, PA 19335 (US); Rahnis, David, White Hall, MD 21161 (US); Gooding, John, Silver City, PA 19475 (US)
(74) Representative: Haley, Stephen

(57) **Abstract**

Methods and systems for digital rights management are disclosed that allows the author of a design file to encrypt the files contents so that only authorized users can view the file, and that allows the author to identify specific users called recipients (104) for authorization. The author then designates (106) the rights granted to the recipients. Preferably the author identifies users and users are authenticated by means of the user's digital certificates. The author may also have the ability to specify what operations (110) a given user can perform, including view, print/plot, export, copy to clipboard, access history and edit. An author can also digitally sign a document or file using their digital certificate. A hash value is created for the item to be signed. The hash value is encrypted using a private key specified by the digital certificate and secured to the item. The hash value is verified by a recipient to determine if the item was modified.

## Description

### BACKGROUND OF THE INVENTION

### Field of the Invention

The present invention relates to a system and method for digital rights management and for digitally signing files.

### Related Art

CAD software is well-known, and used by architects, engineers, designers, planners, and the like to create precision models and technical illustrations. It is used to create two-dimensional (2-D) drawings, maps, and three-dimensional (3-D) models. These drawings, maps, and models are stored in design files. Applications such as MicroStation® products, which are developed by Bentley Systems, Inc., Exton, Pennsylvania U.S.A., and AutoCAD® products, which are developed by Autodesk, Inc., San Rafael, California, U.S.A., are typical of such CAD software, which may be used in the engineering, construction, and operations (ECO) marketplace.

A typical CAD project employed in the engineering context is stored in numerous design files. Each design file typically contains one or more engineering models, each of which represents an engineering domain (e.g., structural, electrical, mechanical, plumbing). Moreover, each engineering model requires numerous items represented by a series of elements to support the complex and precise nature of each design. In this context, the term "element" is used to mean a record containing a variable number of bytes of data arranged in a format that can be interpreted by a program. The term "element" differs from the common notion of an "object" in that each element can have a variable number of bytes, whereas the size of an object is typically defined by its class.

Each item in a model is represented by at least one element or an aggregation of elements. For example, a structural drawing can hold the column and beam layout for a floor plan, which are internally represented by lines, squares and rectangles and additional properties. In this example, an individual beam may be a collection of lines, squares and rectangle elements. The structure of the floor plan may be more complex and require many nested levels of elements to accurately provide a structural representation. The models and their elements can be arranged in blocks.

Organizations who distribute engineering information to customers or subcontractors often would like to deliver a design file, since it is the most accurate, queryable, and rich data format available for conveying such information. Organizations often resort to distributing paper plots, however, for security reasons. It is thought to be easier to restrict access to a paper document, and a paper document usually contains less information that can be misappropriated or misused. As a result, designers and their customers and subcontractors lose the opportunity to increase the bandwidth of communicating engineering data.

Designers who want to collaborate with other designers need to share design files or send design files back and forth, with each collaborator having the right to edit the files. Importantly, everyone else should have limited or no access to these files. It is currently difficult to achieve this access control unless all collaborators work under the same document-management system. Also, once checked-out, local copies of sensitive design files are essentially outside of the secure system and are, on their own, intrinsically insecure. They can be copied, misappropriated, and/or accessed by unauthorized parties. These security concerns serve to hinder collaboration except under very restrictive conditions.

Current systems used to distribute and manage access to design files include paper plots, e-plots, and document management systems that restrict who can access documents. A document management system solution requires designers and recipients to be enrolled in the same document management system. This approach is generally not feasible for distributing documents to customers and subcontractors. Furthermore, a document management system creates unrestricted local copies of a document that can be copied or misappropriated.

An additional method used to prevent unauthorized access to design files include wrapping the file in a .zip file and password-protecting the .zip file. This method has various drawbacks. Wrapping a sensitive document in a protected .zip file and communicating the password to the intended recipients is inconvenient and not secure. Remembering the password is inconvenient for recipients and there is a high chance of passwords being stolen. Also, after the file is unwrapped, the file is unrestricted and can be misused or stolen.

AutoCAD and other software products propose a password-protection option. This option has all of the disadvantages of a password-protection scheme described above. Furthermore, the AutoCAD system is also poorly integrated into the final product and is inconvenient for the end-user.

In addition to controlling access to a design file, at various times during the lifetime of a design file, the author of the design may wish to certify its contents. This certification is referred to as "signing" and includes two parts: the exact state of the model and the identity of the author. Signing the design is typically part of defining a milestone or deliverable of the project. Signing the design can also be a part of recording the review and approval or finishing a project and the archiving an official record.

An authoring user of a CAD system conventionally has at least two options when desiring to sign a design. A first option of signing a design entails having the author print out the design on paper, sign the paper and (optionally) mark the signature with a raised seal. However, paper is often a less desirable medium than an electronic design file since the electronic design file can contain information that is not represented on paper. This option makes the goals of signing a design and conveying high-fidelity engineering data mutually exclusive. Moreover, as today's businesses continue to evolve into paperless workflows, the sending and archiving of paper is often unacceptable. Consequently, methods have been proposed to archive electronic design files and subsequently generate and sign paper documents that authenticate the electronic files. The design files and the paper that authenticate them can then be archived separately. This process is inconvenient and subject to failure, since the components are separated. Also, ink signatures are subject to forgery and are not as secure as digital signatures.

A second option of signing a design entails having the author electronically sign and send the design files, or translations of the files, to a recipient by electronic means, such as an e-mail attachment. Several proposals have been made relating to signing electronic design files. For example, the design files may be wrapped in a .zip file and the .zip file is then electronically signed. Another proposed method computes a checksum of a file. A separate electronic document containing the value of the checksum is then digitally signed by the author. Another proposed method sends the design file as an attachment to a signed e-mail message.

Unfortunately, each of these methods and systems has its own drawbacks and deficiencies. Wrapping a design file in a .zip file is inconvenient, and an unwrapped file is not identifiable as being signed. When using a signed e-mail including the design file as an attachment, the attached design file itself is not identifiable as having been signed and there is no easy way to determine if the design file has been changed since it was unwrapped from either the .zip file or from the email.

Thus, current rights management and digital signature methods have numerous problems. None of the above-described security methods provide for putting a time-limit on access to the file and for disallowing certain operations, such as print, export, access to history and executing macros, based on authorization level. Also, none of these methods allow for stronger or customized authentication mechanisms.

Accordingly, there is a need for file protection and digital rights management systems that can provide these and other features. There is also a need for a method and system that can digitally sign electronic design files and models in a simple and secure manner. The system and method should integrate digital signature support within a CAD product, without requiring an external software module or database (beyond the certificate store provided by the operating system) and with little or no advance set up (beyond importing certificates).

### SUMMARY OF THE INVENTION

A method of controlling access to a file is provided in an exemplary embodiment of the invention. The method comprising: receiving designated rights to the file for an intended recipient; encrypting the designated rights with a master password; encrypting the master password using a public key of the intended recipient; storing the encrypted rights and master password in a designated area of the file; and encrypting the file with the master password.

In another embodiment of the invention, a method for accessing files received by a recipient comprises identifying an encrypted file; using a private key of the recipient to decrypt a master password stored in the file; using the master password to decrypt pre-defined rights stored in a designated area of the file; and using the pre-defined rights to control access of the recipient to the file.

According to another embodiment of the invention, a method for creating a digital signature comprises receiving a digital certificate identifying a signer; receiving an identification of an item to be signed; creating a hash value for the item; encrypting the hash value using a private key specified by the digital certificate; and securing the encrypted hash value to the item.

According to another embodiment of the invention, a method for verifying a digital signature comprises receiving a document including an encrypted digital signature with a hash value; extracting a public key from the digital signature; decrypting the hash value using the public key; creating a comparison hash value for the document; comparing the comparison hash value with the decrypted hash value; and determining the document has been altered when the new hash value and the decrypted hash value do not match.

Further objectives and advantages, as well as the structure and function of preferred embodiments will become apparent from a consideration of the description, drawings, and examples.

### BRIEF DESCRIPTION OF THE DRAWINGS

The foregoing and other features and advantages of the invention will be apparent from the following, more particular description of a preferred embodiment of the invention, as illustrated in the accompanying drawings wherein like reference numbers generally indicate identical, functionally similar, and/or structurally similar elements.

FIG. 1 depicts an exemplary embodiment of a method for controlling access to a file according to the present invention;

FIG. 2 depicts an exemplary embodiment method for accessing a file according to the present invention;

FIG. 3 depicts an exemplary embodiment of a method for creating a digital signature according to the present invention; and

FIG. 4 depicts an exemplary embodiment of a method for verifying a digital signature according to the present invention.

### DETAILED DESCRIPTION OF THE INVENTION

Embodiments of the invention are discussed in detail below. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the spirit and scope of the invention. All references cited herein are incorporated by reference as if each had been individually incorporated.

Methods and systems for digital rights management are disclosed. Exemplary embodiments of the invention provide a system and method that allows the author of a design file to encrypt the file's contents, so that only authorized users can view the file, and that allows the author to identify specific users for authorization. The author selects the users that are allowed to open the encrypted file. Selected users are called "recipients". The author then designates the rights granted to the recipients. Preferably, the author identifies users and users are authenticated by means of the user's digital certificates. The author may also have the ability to specify what operations a given user can perform, including view, print/plot, export, copy to clipboard, access history, and edit. All operations that are not permitted should be automatically disallowed.

The system may allow user created applications to be incorporated into the authoring/viewing software. Accordingly, the author should have the ability to identify compliant applications that can be trusted to uphold rights restrictions. Non-compliant applications are not loaded.

Access to a Uniform Resource Locator (URL) may also be used as a means of authenticating a recipient of a design file. The rights given to recipients can be stored at a given URL as a means of centrally administering rights and expiration times and for dynamically changing this information. In order further limit access to the design file, a time limit may be placed on a given user's right to access a file.

In one embodiment of the invention, a document is created by an author and viewed by recipients via a software application such as Microstation®. The software application, typically run on a computer, includes a rights management tool. The author uses the rights management tool to control access and editing rights that the recipients have for the document. Specific rights for specific recipients can be specified by the author. The protection of rights is achieved in this embodiment through encryption of the document. The author identifies authorized recipients via their digital certificates. Information regarding the recipients' rights to the document is encrypted using the recipients' digital certificate and is stored in the design file. When the recipient receives the document, the recipient can use their private key to decrypt this information. The decrypted information is used by a software application running on the recipient's computer to control the recipients' rights and access to the document.

Controlling access to the design file helps the author protect his "digital copyright" to the contents of a file. Since the file is encrypted, only controlled access is possible. The author may then grant or deny the right of designated users to publish or modify the file's contents. The various rights that may be granted include the right to print, export (copy to clipboard), edit, create digital signatures, and access design history, among others.

There are four primary rights that should be controlled in order to provide adequate "digital copyright" protection: the right to view, the right to print, the right to edit, and the right to export. The right to view allows the recipient to see the contents of the file on a display. The right to print allows the recipient to plot the contents of the file to paper or to generate an e-plot. The right to edit allows the recipient to modify the contents of the file. The right to export allows the recipient to copy elements of the design file to the clipboard or save the contents of the file to a different format, without encryption or restrictions. The view right may be designated as a default right and not explicitly granted by the author. If the view right is so designated, any user that is authorized to access the file in any manner has at least the right to view the file. The remaining rights control how or if the recipient can reproduce the contents of the file.

In further embodiments, specialized rights to control access to unique features of the software program may be defined. For example, a history feature can be provided in order to allow a user to view the design history of the design file. A digital signature feature, described in more detail below, can also be included to create digital signatures in the design file. The author of the design file may also control rights to both of these operations. Many other rights may also be assigned and enforced. Any new rights developed and incorporated into the authoring/viewing software application can also easily be controlled using this system.

The author also has the ability to grant unlimited rights to a recipient. If the recipient is granted unlimited rights, then no operation is prohibited and any other compatible software application can be used to manipulate the design file. By granting unlimited rights, the author gives the recipient the same rights as the author, including the right to create, edit, or delete the licenses that specify rights to the recipients. Moreover, the term "unlimited" includes any rights that may be defined in the future. Normally, the default policy is that if a right is not granted, it is denied; therefore, all future rights are implicitly denied to current users. Unlimited rights, by contrast, preserve author-level access going forward.

Another way in which the author can control access to a design file is to specify a URL which must be accessed when the recipient attempts to open the file. This provides a "deferred" way of authorization, since the recipients are not specified in the file, but by the authorization level of the URL.

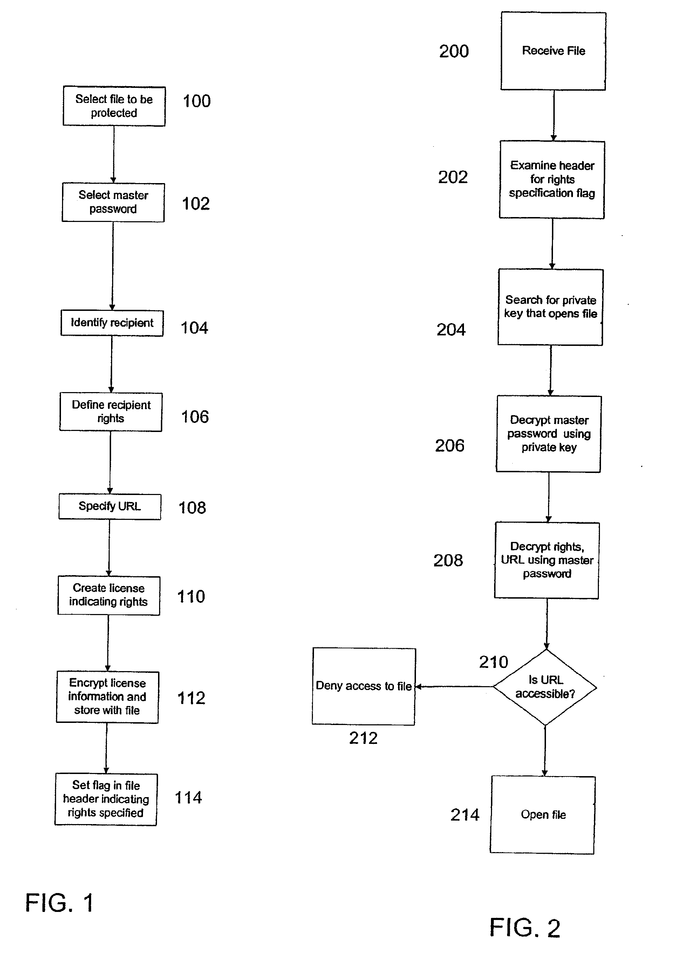

An exemplary system and method are described below with reference to Figures 1 and 2 in the context of an engineering design file and design models created using CAD software, however the system and method are equally applicable to other types of electronic documents or files. According to an exemplary embodiment of the invention shown in Figure 1, the author first selects a design file to be protected per step 100. This is typically done via a GUI provided for this purpose. The GUI is accessed by selecting the appropriate icon. The author is prompted to enter or create a master password for the design file. In order to create or change a recipient's rights the master password must be provided. Once the master password is selected or entered and verified, the user can specify those user's that have access to the file and what the user's access rights are, per step 102. The master password allows a user to control the rights of the file and thus should remain secret. The master password is used to construct an encryption key, for example a 128-bit RC4 symmetric encryption key. Using this key, the contents of the design file and the specified rights are encrypted. Encryption is preferably performed at the lowest level of the system and after compression of the file. The master password supplied by the author may be supplemented with random bits by means of a process generally known as "salting" in order to become 128-bits. This makes the encrypted design file virtually invulnerable to cryptographic attacks, including dictionary attacks. This is standard practice, as specified by PKCS#5. Once the design file is encrypted, it is virtually impossible to open and read the contents of the design file without the master password. A flag in the file's header may be used to identify an encrypted design file as such.

Note that anyone with read/write access to the design file can encrypt it and thereby play the role of the "author." Moreover, anyone who has been granted "unlimited" rights is an author, as explained below. A mechanism whereby administrators can turn off the encryption command for users by means of a configuration variable may be provided. The use of file access restrictions and/or a document management system can also help to restrict who has read/write access to a given file.

In order to ensure a recipient of a file is who they purport to be, a means for identifying the recipient should be provided. For example, a recipient may be identified by means of a digital certificate in step 104. The author can use the recipient's digital certificate to ensure that only the intended recipient has the specified rights to the file. The author is provided with a GUI via which they can select the digital certificates of the recipients that are granted permission to the file. The author must have a copy of a recipient's certificate in order to select it. Obtaining a copy of person's digital certificate is a common task and is well known to users of secure e-mail.

Once the author selects a recipient's certificate, the author can select from the available rights, such as those described above, per step 106. The optional URL can also be specified at this time, per step 108. A recipient license is then created for the recipient in step 110. The recipient license is stored in a special area of the design file, for example, a license storage area. The recipient license may contain the master password, the recipient's rights, the expiration time, and the optional URL, among other information. Most of the data in the license is encrypted using the master password in step 112. The master password itself is encrypted using recipient's public key. The use of public key cryptosystems to encrypt a message for a designated recipient is common practice, for example, in secure e-mail. A public key cryptosystem defines how to create a pair of asymmetric encryption keys, such that a message encrypted with one can only be decrypted with the other. One of the keys is kept secret and is called the private key. The other key is published and is called the public key. Therefore, by using this system only the recipient having the appropriate private key can decrypt the master password portion of the license. Once the encrypted license is created, it is added to the design file. In step 114, a flag in a header of the design file is set to indicate the file is protected.

When the author first encrypts the file by specifying a master password, a password license with unlimited rights and no expiration is automatically created. The password license provides for password access to the file. Anyone knowing the master password can gain access to this password license. This is the default mechanism whereby the author retains unrestricted access to an encrypted file. The author can also create a recipient license for himself, so that he does not have to supply a password in order to open the file. Furthermore, to effectively remove the option of password access, the author can create an essentially random master password, then create a recipient license for himself with unlimited rights, and then forget the master password.

Once the author has designated rights to the file and encrypted the file, the various recipients are able to access the file according to their designated rights. The encrypted file may be made available to the recipients in any manner, for example, securely stored on a network, hard drive or diskette, or freely duplicated and distributed by email, Intranet or Internet.

A process via which a recipient is granted or denied access to a protected design file is illustrated in Figure 2. The recipient receives the file in step 200, for example, via one of the means described above. When a recipient tries to open a design file, it is determined if the design file is encrypted in step 202. This may be done by examining the encryption flag in the file's header. If the flag is set, the file is encrypted. The license-storage area of the design file is then searched to locate a license that the recipient can open. Each of the recipient's digital certificates is scanned to find one containing a private key that can decrypt the master password stored in one of the licenses, per step 204. Once the proper private key is located, it is used to decrypt the master password per, step 206.

If a private key that can decrypt the master password of a license is found, it is concluded that the user is an authorized recipient of the file. It is assumed that if the current user has access to a private key, then he is the rightful owner of that key. Moreover, it is assumed that the author who designated the recipient using the corresponding public key knew that the currently logged in user is the owner of the key. Digital certificates containing private keys are managed by the operating system in a secure fashion. The currently logged in user can access only his own certificates. Private keys can also be stored on "smart cards" (AKA "tokens") for better security. Accordingly, secure storage and access to private keys should be maintained. Obviously, if the private key is stolen or if a different person manages to log into the recipient's computer using the recipient's login credentials, then these assumptions are incorrect. Private key security, etc. should always be maintained by the recipient.

Once the master password is decrypted using the recipient's private key, the master password is used to decrypt the rights, expiration, URL and other information that are stored in the license per step 208. However, even though the recipient is able to decrypt a file using a private key and the master password, the recipient may still not be entitled to access the file. If a URL is specified in the license, an attempt to access the URL is made in step 210 before permitting access the file. If the URL cannot be accessed, then the user is denied access to the file per step 212. The URL serves as an additional security measure for authenticating users. For example, the URL could identify a resource on a WebDAV server, NFS or Windows fileshare to which only certain users have access. Denying access to this server or fileshare is therefore equivalent to denying access to the encrypted file that is tied thereto by means of the license URL. Note that the encrypted file does not have to be stored on the server or fileshare in order for this access check to be enforced.

If the URL identifies a file that specifies digital rights, the identified file is read to obtain the rights and expiration that should be applied to the user. This allows an organization to administer rights centrally, even when encrypted design files are widely distributed.

If the security checks for opening the file, for example, license decryption and URL access checks, are passed, then the design file is opened per step 214. As explained above, the current user's private key is used to decrypt the master password that is stored in the license. The master password is then used to decrypt the contents of the design file.

The contents of the design file are preferably read and decrypted incrementally, not all at once. For example, only those parts of the design file that are needed to display requested models and/or perform operations such as scanning are decrypted. In order to facilitate incremental decryption, the design file may be divided into physical units called models, plus various control structures. Models are further divided into "blocks." The software application should read data in units of whole blocks, and only those blocks that are needed are read and decrypted. The block is called the unit of I/O. The block is also the unit of encryption. Organizing the data in a file in this manner allows only as much data as is needed to be decrypted. A method or organizing files into blocks is described in co-pending U.S. Patent Application Serial Number 09/929,278, which is incorporated herein by reference. This data organization also minimizes the performance impact of decryption. Various other control structures may exist in the design file that are not organized into "blocks." The unit of encryption for these control structures is therefore different, but that does not affect the general understanding of the invention.

Only design file data in memory is decrypted. Data in the design file on disk or other storage medium remains encrypted. Thus, the design file itself is never decrypted or left vulnerable to be altered or stolen. Data may also be held in memory in encrypted form. In that case, individual pieces of data would be decrypted each time they are accessed.

It should be noted that only "compliant" software can access data, as explained below. Additionally, the master password is never shown to the recipient. The master password is preferably processed in low-level code but is not divulged to the recipient. Thus, the security of the file is not compromised.

When the file is ready to be acted upon by the recipient, session restrictions specified in the license are invoked before allowing the recipient to begin using the file. Those parts of the GUI for the authoring/viewing software that would invoke an operation that is not permitted by the specified rights are disabled. For example, if the print right is not granted, then the Print command is disabled. Also, those parts of the software application code and of applications that could be invoked by other means to perform a restricted operation first check for the corresponding right to perform that operation. If the right is not granted, an explanatory error message is printed and the operation is not performed.

In a further embodiment of the invention, access to the design file can be restricted to a period of time specified by the author. When creating the license, the author can specify an amount of time, for example, an expiration time, during which a recipient can access the design file. This time is included in the license encrypted in the design file.

When the recipient opens the design file, it is determined if the license contains an expiration time. If so, the expiration time is compared to the current time. If the license has expired, a warning is issued to the user, identifying the author and recommending that the recipient obtain a new copy of the file. Optionally, if the expiration time has passed, the recipient can be denied access to the file. A timeserver can be used to enforce the expiration time. However, use of a timeserver prevents users from working offline.

In order to expand the functionality of the authoring/viewing software application, it is possible to create applications that add new functions to an existing version of the software application. One such mechanism is called "MDL". A given MDL application that is not written and tested for compliance with digital rights may be able to perform operations that the author wished to disallow to the current user. Moreover, a malicious MDL application could be written deliberately to circumvent rights restrictions. To prevent this from happening, while still allowing users to use MDL applications, the author can be provided with a means to identify compliant applications that do not violate digital rights. A compliant application is simply an application that checks for digital rights before attempting to perform a restricted operation. An application is certified to be compliant by inspecting its code and/or testing it carefully.

For example, the author or someone else can certify an application as compliant by digitally signing the application. The digital signature serves two purposes: 1) to prevent tampering of the file and 2) to enable the author and the software application to recognize the MDL application as certified as compliant, as described below. A software tool is provided to sign MDL applications. MDL may allow for multiple signatures to be applied by the same person or different persons to the same file. Adding a new signature does not invalidate existing signatures. An exemplary system and method for digitally signing files is disclosed in more detail below.

After testing an MDL application, the author recognizes an application as compliant and suitable for use by recipients of a given file by identifying the application with the certificate used to digitally sign it. A list of recognized certificates for compliant applications that can be used to manipulate a design file is stored in the encrypted license for the design file. When an encrypted file is opened with restricted rights, an MDL application is not loaded unless the MDL is 1) digitally signed and 2) some signature on it was created using a certificate that has been identified by the author. The signature must also be verified in the manner normally defined for a digital signature, for example as described below.

However, it should be noted that recognizing compliant applications is radically different from the strategy of trusting applications that is performed by Web browsers. An application is compliant, not because it is signed or because it is signed by an authority that the user trusts, but because it is signed by a certificate that the author trusted for this purpose. Furthermore, the curent task is simply to recognize the signature that the author identified.

This recognition strategy has significant features and benefits for the author. It allows the author to use and/or recognize certificates that would not normally be trustworthy for code signing. A class 1 certificate (normally only used for personal e-mail) and even a self-signed certificate can be used and/or recognized without compromising security. This makes the recognition capability much more widely available to users of the software application. Additionally, the process of creating, certifying, and recognizing compliant applications is delegated and decentralized. It is not required for the software application creator to test and certify applications. The author has complete control over and responsibility for testing and certifying applications. The author can recognize digital signatures produced by others, or he can add his own signature to existing applications, or he can write his own MDL applications.

An alternative to certifying compliance with digital rights is to attempt to catch and abort the operation of possibly non-compliant applications. To complete the "closed world" assumption necessary to uphold rights restrictions, not only are non-compliant applications not be loaded when a restricted file is open, but restricted files are not be opened after applications that are not designated as compliant for that file have already been loaded.

In addition to the master password license described above, the author may create additional password licenses with restricted rights, expiration times, and URLs. A password license is like a recipient license, except that is not necessarily specific to a single recipient. Instead, a user acquires a password license by supplying the appropriate password. A URL specified by the author is accessed. The rights defined by a file identified by the URL are then applied. A single design file can contain any combination of zero or more password licenses and zero or more recipient licenses. One use of this capability could be for the author to create one or more restrictive password licenses for those who only view the file, and to create recipient licenses with unlimited rights for those who edit the file.

### Reference Files

A design file called a "master file" may reference and display the contents of other design files, called "reference files." Each design file has its digital rights protected separately. Therefore, the master file may be protected, while the reference files are not protected, or, vice versa. In order to protect all files in a set, each file should be protected individually, that is, each file is encrypted and then licenses are created for other users of the file.

A user must acquire a license for each reference file individually when opening a master file with reference files attached. If a user has access to the master file but not a reference file, that reference file is not opened or displayed. However, this does not prevent use of the master file.

When using password licenses, the master password is used to attempt to access any reference files. If the passwords are all the same, then the user is prompted only once to enter the password. The same password could convey different rights in each file. Otherwise, the user is prompted to enter a password for each file that has a different password. When opening a nested reference file, the password of the file's parent is first attempted and so on, up to the master file, in order to avoid prompting the user. Each file carries its own set of rights. Rights to reference files can be applied individually and sometimes the most restrictive right in the set is applied to a reference file, depending on the operation.

### Digital Signatures

A system and method for digitally signing documents is also provided. The system and method are described below in the context of engineering design files and design models. However, the system and method are equally applicable to other types of electronic documents or files. According to an exemplary embodiment of the invention, a signer selects a combination of files, a file, document, or portions thereof, to which a digital signature is to be applied. The digital signature is created using a one-way cryptographic hash of the contents to be signed and a digital certificate identifying the signer. Note that the contents to be signed include a copy of the signer's certificate, plus other information such as the signing date. The hash value and a copy of the signer's certificate are stored in the signature. A private key associated with the digital certificate is used to encrypt the signature in order to certify the signer created the signature and to make the signature tamper evident. If the document or file is altered after being signed, the process of verifying the signature reveals this. The signer may also be able to select where in the document or file a visible mark representing the signature is displayed.

A digital signature may optionally include the contents of reference files. Referencing allows the creation of composite drawings where the contents of several files are displayed in a single view. For example, a composite drawing is design file that references a number of other files or models and brings data together in a way that defines a view of the project. Various composite drawings can be created based on the same set of design files. Each composite file references data that is relevant to its particular view. A user can sign a composite drawing and in effect, sign a view of the project. The user can sign what they see in the view, without regard to file boundaries. Thus, different views of a single project may be signed. When a composite drawing is signed, it is preferably not necessary for the signer to individually sign each reference file.

The reference files may be in a different format from the referencing file. For example, the referencing file may be in the DGN format used by MicroStation while the referenced file may be in the DWG format used by AutoCAD. Thus, the system can sign files that are edited with different authoring/viewing software. In this instance, the signature of the file is checked when the file is accessed with the application software incorporating the digital signature tool.

Once a document or file is signed, the signed document or file is now ready for transfer to a recipient. These transfers can take place electronically via email, diskette or by any other means. The digital signature should be permanently attached to its associated document or file. Thus, the signature is transferred along with the transfer of the file or document. The recipient can examine the signature and authoritatively determine whether the document or file is genuine or if the document or file has been altered since signing. During the verification process, the file, or relevant portion thereof, is examined to extract information therefrom. This extracted information is hashed in the same manner as was used to create the signature and the resulting hash value is compared with the hash value that is stored in the signature. If there is a match, the file is genuine; no match indicates tampering. Accordingly, a recipient of a signed file can quickly and positively identify and verify digital signatures within a design file. This may be accomplished by displaying visible confirmations of the digital signatures in context where appropriate. Users and applications may also be provided with the ability to tailor how the signatures are created and how signers are authenticated.

According to further embodiments of the invention, one or more persons can digitally sign a design file and/or models within a file and multiple signatures, by one or more persons, are also possible. The signature applied to a file can have a limited scope within a file, if necessary. When multiple signatures are used, a signer can make his signature dependent upon other signatures. A signature may depend on pre-existing signatures or may require a signature to be later added in order to be valid. When adding a signature dependent on pre-existing signatures, the signer can identify the prerequisite signatures when making their signature. The prerequisite signatures are included in the hash for the new signature. Therefore, removing or otherwise invalidating a prerequisite signature invalidates any signatures that depend from it. When creating a new signature dependent on later added signatures, a copy of the digital certificate for the later added signatures is needed. The later required signatures are included in the hash for the new signature. Therefore, removing or otherwise invalidating a later required signature invalidates the signatures that depend on it. Additionally, adequate support for signature security and signer authentication should be provided so as to make signed files acceptable under applicable electronic signature law.

Once a document is created using an authoring software application, the document can be signed using the system and method described herein. The resulting digital signature is more secure than a hand-signed paper document since the digital signature and its audit trail information are permanently embedded directly in the document. This information travels with the document at all times. As a result, the document can be securely stored on a network, hard drive or diskette, and freely duplicated and distributed by email, Intranet or Internet. The electronic original can also be archived in its native format. If necessary, the document can be securely sent to an imaging system or securely printed for hard copy archiving. Additionally, an authentic copy of the signed electronic original can be printed.

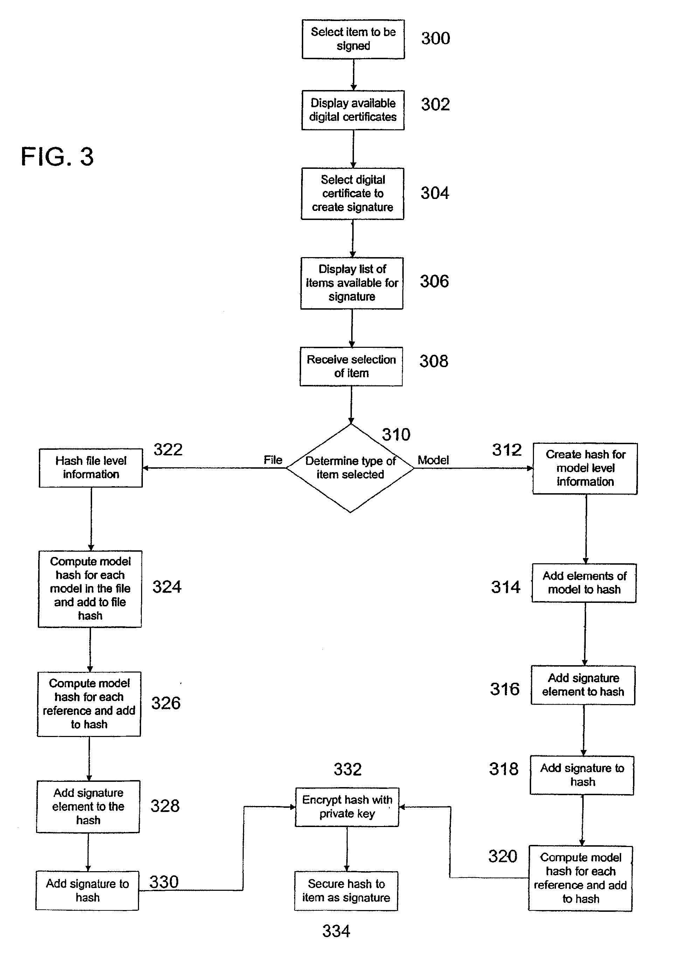

Referring now to Figure 3, a method for digitally signing a document is described. In this embodiment, a digital signature tool is built into the authoring/viewing software application, for example a CAD program, in order to allow users to create and verify a digital signature. The digital signature tool may be accessed via a GUI in the program, for example, by clicking on the appropriate icon in a toolbar. Once this icon is selected, the signing process begins. In steps 302 and 308 an item to be signed and a digital certificate to be used to create the signature are selected. Typically, a digital certificate is used to verify the identity of the signer of the file. Various Certificate Authorities (CA) issue digital certificates. A digital certificate is a well-known data structure that associates a subject name, such as a person, with a public key cryptosystem. CAs utilize different processes to verify the identity of a person receiving the digital certificate. Different recipients of the signature may only accept digital certificates from certain sources. The signer may therefore have various digital certificates for different recipients and purposes. In steps 302, 304, a graphical user interface (GUI) is provided for the signer to select a digital certificate to be used in signing the file from the available digital certificates. The signer may also be prompted to provide annotation data and an optional expiration date for the digital certificate.

The operating system on which the software application is running typically already manages a secure database of digital certificates for users. The signer can easily browse their available digital certificates using the GUI and acquire new digital certificates using mechanisms provided by the operating system and other publicly available tools. For example, signers can easily obtain and manage certificates for secure e-mail purposes. These digital certificates can also be used directly for creating digital signatures. Preferably, only unexpired digital certificates can be selected via the GUI. However, the use of self-signed or other untrusted certificates is not necessarily prohibited. Only certificates with private keys should be used, as the private key is an important part of creating a tamper-proof signature.

The private key is part of a public key cryptosystem, which is well known to those of skill in the art. As described above, a public key cryptosystem can be summarized as a pair of keys such that data encrypted with one can only be decrypted with the other. One of the keys is called the private key and is kept secret. The other key is called the public key and is published. The standard RSA public key cryptosystem for digital signatures is preferably used with the described embodiment.

It may be necessary for an entire file, combinations of files, a model, or number of models to be digitally signed. Therefore, means for selecting what is to be signed are provided. For example in steps 306-308, the software application can provide a GUI that displays a menu of the files, models, etc. available for signature. The signer then simply selects the appropriate item from the menu. For example, a signer may select a particular design file from the menu. The selected design file may include a number of different models. The models present in that file may then be displayed to the signer. The signer can indicate if the signature should apply to the whole design file or just selected models.

A similar option may also be provided for composite drawings. For example, a user may select a file which is a composite drawing for signature. A GUI can indicate to the user that the selected file references other files or models. The user can then specify that their signature captures not only the elements in the file selected, but also the contents of all the files that are referenced by that file and displayed in the view. The user may also select only certain ones of the reference files be included in the signature. Alternatively, when a composite drawing is selected, a signature may automatically be applied to include all reference files of the composite drawing.

After the items to be signed and the digital certificate are selected, a signature is created from a hash of the contents of the item being signed, the signer's certificate, and other signing information. The signer's private key is then used to encrypt the signature. This process certifies that the signer created the signature and makes the signature tamper-evident, as is described below. This process may be performed according to standard practice for digital signatures. For example, the encryption may be performed using a standard public key cryptosystem such as RSA. A hash may be computed using the standard digital signature technology of a one-way cryptographic hash to capture the state of data in the file or model in a condensed form. The hash is defined so that any change to the hashed data causes the hash value to change. Thus, a hash is created for the selected model or file, as well as for the signature. If the signed model or file or the signature is altered, a hash created for the altered file or model differs from the original hash, indicating tampering with the file or signature. Since the signature includes the signer's certificate, it is also impossible to modify or replace the certificate and thus falsify the record of who created the signature. The SHA1 hash algorithm can be used to create the hash, for example.

Depending on whether a composite drawing, a whole design file or a model is being signed, the signature captures different information. Therefore, step 310 determines the type of item being signed. A model signature preferably captures the state of all elements in the current model, plus model-level information, such as units, model name, etc. A file signature preferably captures the state of all models in the file, as described above for model signatures, plus additional file-level information. A signature for a composite drawing preferably captures file signature information for each file referenced by the composite drawing. The signature can be applied to different parts of the same composite drawing, file or model. Additionally, multiple parties can sign the same composite drawing, file or model.

A method for computing a signature hash according to an exemplary embodiment of the invention is now described. A method for creating a model signature hash is described first with reference to steps 312-320, followed by a description of a method for forming a file hash with reference to steps 322-330.

For a model hash, a hash is created from the model-level information for the selected model, step 312. The model-level information includes general information about the model, such as model name, units, etc. Next, in step 314 the contents of all the elements that make up the model, except for the signature element, are added to the hash. The contents of the signature element are then separately added to the hash, excluding the signature itself, step 316. The signature is then added to the hash, excluding the hash value itself, step 317. A model hash capturing the current state of the model and signature is thus created.

Next, the process for creating a file hash for a file being signed is described. First, a file hash is created from file-level information, step 322. File-level information includes general information about the file such as its name. A model hash for each model in the file is the computed in step 324. This is done using the process described above. The model hash for each model is then added to the file hash. The contents of the signature element are then separately added to the file hash, excluding the signature itself, in step 328. The signature is then added to the hash, excluding the file hash value itself, in step 330. A file hash capturing the current state of the file, the models therein, and the signature is thus created.

The process for creating a hash for a composite file is somewhat similar to that described for creating a file hash. As mentioned above, a composite drawing include references to other files. To include references in a digital signature, each reference is treated as though it was an additional model of the referencing file. Note that a reference is actually a reference to a model within an external file, so a model hash captures the content of the reference. Therefore, including reference files in a signature entails computing and incorporating the model hash for each reference file in the signature hash.

It is possible to include references in both file and model hashes. The difference is in the scope: to compute the hash for a file signature including references, all references attached to all models in the file are included, while to compute a model signature including references, only references attached to the model are included. That is, when computing a file signature, after adding file-level information to the hash and computing a model hash for each model in the file and adding each model hash to the file hash, a model hash for each reference is computed and added to the signature hash per step 326. When computing a model signature, after computing the model hash, a model hash is then computed and added for each reference, per step 320. It is understood that the signature includes a copy of the signer's certificate that is not encrypted, as well as additional information about the signing, including the signing date.

After the appropriate hash is created, the hash is encrypted using the signer's private key and the encrypted hash is then stored in the signature, per steps 332-334.

In the hash creation process described above, the signature elements are added to the hash separately from the elements of the model. Therefore, means for distinguishing the signature element from the other elements in the model should be provided. In the present embodiment, the signature elements can be distinguished by appending a specially marked data linkage to them. This linkage contains the digital signature itself. This linkage is recognized during the hash creation process to identify the signature element so that the signature element is added to the hash appropriately. This linkage also supplies the signature data when verifying and displaying signatures, which processes are described below.

In order to provide enhanced security, a tool for detecting genuine signatures and for exposing elements or cells that masquerade as signatures may also be provided. This tool highlights all valid signatures and is implemented in a way that it cannot be reproduced, replicated or replaced by a third party. For example, the tool that allows users to view and verify signatures can be implemented via a GUI bound to a verification application. The verification application can be an MDL application signed by the provider of the viewing/authoring software. The provider of the viewing/authoring software also signs a resource file that contains the GUI definitions. When applications are loaded at runtime, the viewing/authoring software verifies that the verification application and resource file are signed by the proper party. If either of the verification application or resource file is not signed or is tampered, the viewing/authoring software rejects it.

The digital signature created using the above-described process can be placed anywhere within the selected file or model. The digital signature is represented in the file or model as an element. Signatures may be represented as text elements, raster image elements, or other representations. If the signature is being applied to a file, file signature elements are preferably stored in the internal "settings" area of the file. Model signature elements are preferably stored in the models to which they apply. When creating a model signature, the user is prompted to indicate where the signature should be displayed within the current model. This creates a special element in the model that is based on a text element, using the current font, color, weight, and level.

In addition to be being based on a text element, the digital signature can be based on a cell. In an exemplary embodiment, a signature cell includes 1) the logical name of the signature, 2) a graphic to represent the signature visually, and 3) a copy of the digital certificate to use in computing the digital signature itself. The use of signature cells significantly streamlines the process of creating signatures and improves quality control. These benefits are derived from the improved workflow that is made possible. Administrators and/or users can create signature cells using the correct digital certificates and appropriate graphics and names. The signature cells may then be organized and stored them in cell libraries. Later, a user who wishes to place a signature in a document can select a signature cell from a cell library based on the signature cells logical name and its appearance. The digital certificate is determined by the software from the cell. In effect, signature cells create a custom and natural user interface for different users. The signature cell interface is both easy to use and reduces the risk of users selecting the wrong certificate. The signature cell mechanism behaves like and offers the benefits of a signature database without requiring an external database -- only the existing and familiar cell and cell library mechanisms are used.

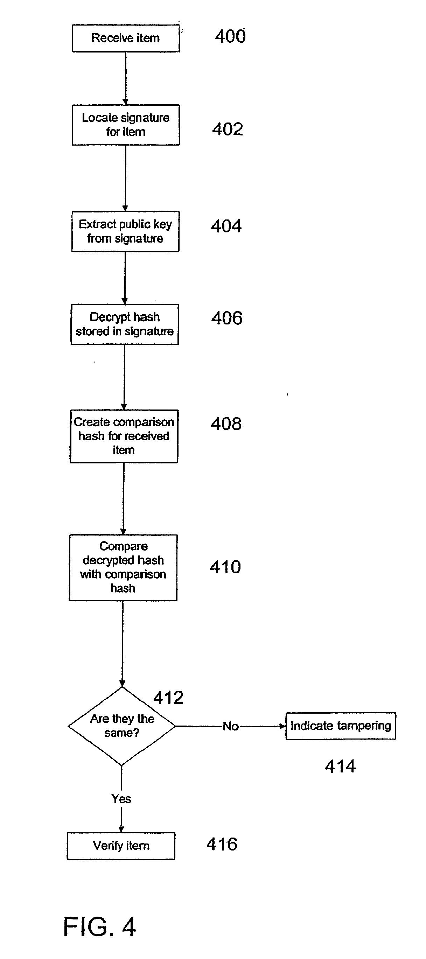

Figure 4 is a flowchart of a method for verifying a digital signature. Once the file or model is signed, it can be transferred to a recipient. The recipient receives the file in step 400 and verifies the contents of the file. A means for viewing and verifying signatures is provided for this purpose. This means may be a GUI via which all existing digital signatures, including file signatures and model signatures, can be displayed. Users of the system can view signature details and their certificates. The verified, expired, and trusted statuses of all signatures are clearly displayed. Trust is well-known to mean that a Certificate Authority (CA) that is trusted by the user issued the digital certificate and that the digital certificate is intact and was not expired at the time of signing. The operating system usually automatically maintains a list of trusted CAs. In addition, the signer's certificate name and all annotation data are displayed for each signature in a condensed format.In order to verify a signature, the signature must be located, per step 402. The signatures can be located using the data linkage mentioned above. The viewing software considers every element in the scope of the signature. The elements that represent signatures are recognized as having the data linkage attached to them. The entire file is scanned to detect all signatures that have file scope. The active model within the file is scanned to detect signatures that have model scope. The same process is also used to detect file and model signatures in the references that are attached to the active model. The linkage should contain the actual digital signature data, including the encrypted hash value, a copy of the signer's digital certificate, plus annotation data.

The hash value stored in the signature is used to verify digital signatures. As mentioned above, when creating a digital signature, the signer's private key is used to encrypt the hash value and the hash value is stored in the signature, as described above. When verifying a digital signature, the public key is extracted from the digital certificate stored in the signature and the public key is used to decrypt the stored hash value per steps 404-406. A comparison hash value for the received file or model is then created using the same hash creation process described above used to created the stored hash value. The stored hash value is compared with the newly calculated comparison hash value, steps 408-410. In steps 412-416, the results of the comparisons are evaluated. If the hashes do not match, something has changed in the scope of the signature, for example, to the model or the signature, and the signature is not verified. A signature is automatically invalidated when any data is changed within the scope of the signature. Users do not need to use a tool to recompute or test the verified status of signatures.

Computing hash values for a large number of elements can be time consuming. Therefore, a process for minimizing the number of times a hash value for a given model is computed is provided. The process uses caching to re-use a previously computed hash value. Since digital signatures can have difference scopes, for example file and model signatures, a modified caching technique is used. In the described embodiment, a model is the smallest signature scope. A file signature is comprised of models, plus other file level information. Thus, a file signature can be defined as a combination of individual model hash values, plus the hash value of the other information that applies only to the file. Using this definition, previously computed model hash values can be used in creating a hash for a file. For example, in creating a file hash value, model hash values for the models in the file are initially computed. Then, the hash value for file level information is computed. A final file hash value is computed using the model hash values and file information hash value as input. If some of the model hash values were previously computed, these values can be used in creating the file hash value without recomputing them. Thus, a given model hash value calculation is only performed once and is subsequently fed as input into any digital signature that includes that model.

This caching strategy also applies to computing a digital signature that includes references. A signature that includes references can be defined as comprising the hash value of the elements and other information that are directly in the signatures scope, plus the model hash values of the references models.

The digital signatures for an item may be displayed graphically in context where appropriate. Model signatures are preferably displayed as elements in the context of the engineering design. When a cell is used for the digital signature, the signer can specify which cell is used for the digital signature. This allows the signer total control over the appearance of the signature. Additionally, the cell selected for the digital signature may display information about the signature, for example, when the signature was created. A macro-substitution scheme can accomplish this. The macro-substitution scheme or a graphical decoration can be used to indicate the digital signature's verified/trusted/expired status.

Preferably, file signatures are not displayed as elements of the design, but appear only in the GUI. The status of the digital signature is indicated via the GUI. For example, in a graphical display, a green check mark is displayed next to the signature to indicate that it is verified, unexpired, and trusted. If a signature is not verified or has expired, a red X is displayed next to the signature and a red strikeout line runs through the signature text. If a signature was created using a certificate that the current user does not trust, a yellow question mark is automatically displayed next to the signature.

Additionally, users can inspect the copy of the signer's certificate that is saved with the signature using standard operating system viewing tools. These tools identify the signer by subject name, identify the issuer, and indicate the trusted status of the certificate. Users can also look at annotation data and certificate data, which are saved when the signature is created, to verify the identity of the signer. The GUI may also allow the user to select a signature from the list and then find it in the display.

An application programming interface (API) that allows an application to create digital signatures using built-in functions that guarantee that the signature's internals are computed correctly may also be provided. The API can be used to control where signatures are placed in the model or who can place a signature. The API also allows applications to locate and verify all signatures in a file. This allows for custom signing schemes to be checked and for custom signer identification schemes to be implemented.

The embodiments illustrated and discussed in this specification are intended only to teach those skilled in the art the best way known to the inventors to make and use the invention. Nothing in this specification should be considered as limiting the scope of the present invention. The above-described embodiments of the invention may be modified or varied, and elements added or omitted, without departing from the invention, as appreciated by those skilled in the art in light of the above teachings. For example, the order in which the steps are performed may be varied as long as the above-described dependencies are maintained. It is therefore to be understood that, within the scope of the claims and their equivalents, the invention may be practiced otherwise than as specifically described.

## Claims

1. A method for creating a digital signature, comprising receiving a digital certificate identifying a signer; receiving an identification of an item to be signed; and creating a hash value for the item;
encrypting the hash value using a private key specified by the digital certificate; and
securing the encrypted hash value to the item.

2. The method of claim 1, further comprising:
determining the type of item being signed; and
when the item is a model, the creating step comprises:
a) creating a model hash for model level information;
b) adding all elements in the model, except for a signature element, to the model hash;
c) adding contents of the signature element to the model hash, excluding the signature itself; and
d) adding the signature to the hash, excluding the hash value.

3. The method of claim 2, further comprising repeating steps a)-d) for each reference model.

4. The method of claim 1, wherein the encrypting step comprises:
creating a file hash for file-level information;
computing a model hash for each model in the file;
adding the model hash for each model in the file to the file hash;
adding the signature element to the file hash, excluding the signature itself and
adding the signature to the file hash, excluding the file hash value.

5. The method of claim 4, further comprising creating a model hash for each reference and adding the model hash to the file hash.

6. The method of claim 4 or 5, further comprising using an existing model hash in creating the file hash if the model hash for a model exists.

7. A method for verifying a digital signature, comprising:
receiving a document including an encrypted digital signature with a hash value;
extracting a public key from The digital signature; decrypting the hash value using the public key; creating a comparison hash value for the document;
comparing the comparison hash value with the decrypted hash value; and determining the document has been altered when the new hash value and the decrypted hash value do not match.

8. The method of claim 7, further comprising displaying a graphical representation of the status of the signature.

9. The method of claim 7, further comprising:
identifying a pre-existing signature;
including the pit-existing signature in the hash, whereby invalidating the pre-existing signature also invalidates the signature.

10. The method of claim 7, further comprising:
searching the document for valid signatures; and
uniquely indicating valid signatures in the document.

11. The method of claim 7, further comprising:
displaying all signatures in the document;
displaying a verified, trusted, or expired statuses of the signatures; and displaying annotation data for the signatures.
